(19) Europäisches Patentamt
European Patent Office
Office européen des brevets

(11) Veröffentlichungsnummer: **0 336 404 B1**

(12) # EUROPÄISCHE PATENTSCHRIFT

(45) Veröffentlichungstag der Patentschrift: **03.08.94**

(51) Int. Cl.[5]: **C08G 77/56**, C08G 79/08, C04B 35/56

(21) Anmeldenummer: **89106015.4**

(22) Anmeldetag: **06.04.89**

Die Akte enthält technische Angaben, die nach dem Eingang der Anmeldung eingereicht wurden und die nicht in dieser Patentschrift enthalten sind.

(54) **Verfahren zur Herstellung von Organopolysilanen.**

(30) Priorität: **07.04.88 DE 3811567**

(43) Veröffentlichungstag der Anmeldung: **11.10.89 Patentblatt 89/41**

(45) Bekanntmachung des Hinweises auf die Patenterteilung: **03.08.94 Patentblatt 94/31**

(84) Benannte Vertragsstaaten: **BE DE FR GB IT**

(56) Entgegenhaltungen:
**EP-A- 0 304 697**
**DE-A- 2 743 843**
**FR-A- 2 317 039**
**US-A- 3 415 778**
**US-A- 3 687 872**
**US-A- 4 667 046**

**WPI, FILE SUPPLIER, n 78-61182A, Derwent Publications Ltd., London, GB;& JP-A-53081727**

(73) Patentinhaber: **WACKER-CHEMIE GMBH**
**Hanns-Seidel-Platz 4**
**D-81737 München(DE)**

(72) Erfinder: **Kalchauer, Wilfried, Dr. Dipl.-Chem.**
**Bachstrasse 14**
**D-8263 Burghausen(DE)**
Erfinder: **Pachaly, Bernd, Dr. Dipl.-Chem.**
**Robert-Koch-Strasse 167**
**D-8263 Burghausen(DE)**
Erfinder: **Zeller, Norbert, Dr. Dipl.-Chem.**
**Schweitzerstrasse 5**
**D-8263 Burghausen(DE)**

EP 0 336 404 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Organopolysilanen.

Gegenstand der Erfindung ist ein Verfahren zur Herstellung von Organopolysilanen, das dadurch gekennzeichnet ist, daß Si-Si-Bindungen enthaltende Organosiliciumverbindungen der allgemeinen Formel I

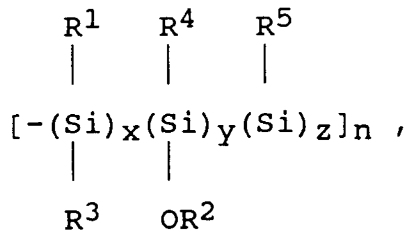

wobei
$R^1$, $R^3$, $R^4$ und $R^5$ jeweils unabhängig voneinander Wasserstoff-, Alkyl-, Alkenyl-, Aryl- oder Alkoxyrest bedeuten,
$R^2$ für Wasserstoff- oder Alkylrest steht,
x im Bereich von 0,1 bis 0,9,
y im Bereich von 0,01 bis 0,5,
z im Bereich von 0 bis 0,5 und
n im Bereich von 2 bis 1000 liegen,
mit der Maßgabe, daß die Summe aus $(x+y+z)$ gleich 1 ist, in Gegenwart von 0,1-10 Gew.-% Borsäure, bezogen auf eingesetzte Si-Si-Bindungen enthaltende Organosiliciumverbindungen, umgesetzt werden.

Durch das erfindungsgemäße Verfahren lassen sich Organopolysilane herstellen, die keine Si-gebundenen Halogenatome enthalten, wobei auch die Ausgangsverbindungen vorzugsweise halogenfrei sind. Des weiteren lassen sich durch das erfindungsgemäße Verfahren leicht funktionelle, organische Gruppen in das Organopolysilan einbauen, wodurch die chemischen und physikalischen Eigenschaften in breiten Bereichen gesteuert werden können.

Si-Si-Bindungen enthaltende Organosiliciumverbindungen sind bekannt, wie beispielsweise in US. Re. 31447, US 4667046 oder W.H. Attwell et al.; J. Organomet. Chem. 5 (1966) 594 und 18 (1969) 69 beschrieben, worauf in diesem Zusammenhang ausdrücklich verwiesen wird.

Borsäure ist ein großtechnisches Produkt und dem Fachmann bekannt. Vorzugsweise wird Borsäure mit einem Reinheitsgrad von 90 bis 100 Gew.-%, insbesondere 99 bis 100 Gew.-%, eingesetzt.

Die Umsetzung der Si-Si-Bindungen enthaltenden Organosiliciumverbindungen erfolgt vorzugsweise bei Temperaturen im Bereich von 20 bis 250 °C, insbesondere 110 bis 180 °C.

Si-Si-Bindungen enthaltende Organosiliciumverbindungen entsprechen der allgemeinen Formel I

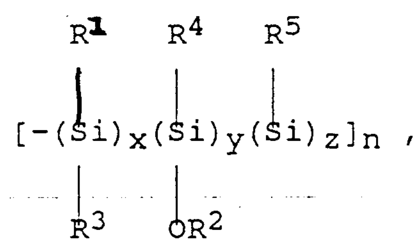

wobei
$R^1$, $R^3$, $R^4$ und $R^5$ jeweils unabhängig voneinander Wasserstoff-, Alkyl-, Alkenyl-, Aryl- oder Alkoxyrest bedeuten,
$R^2$ für Wasserstoff- oder Alkylrest steht,
x im Bereich von 0,1 bis 0,9,
y im Bereich von 0,01 bis 0,5,
z im Bereich von 0 bis 0,5 und
n im Bereich von 2 bis 1000 liegen,

mit der Maßgabe, daß die Summe aus (x + y + z) gleich 1 ist.

Bevorzugte Alkyl-, Alkenyl-, Aryl- und Alkoxyreste haben 1 bis 6 Kohlenstoffatome.

Beispiele für Alkylreste sind der Methyl- und Ethylrest, für Alkenylreste der Vinyl- und Allylrest, für Arylreste der Phenylrest und für Alkoxyreste der Methoxy-, Ethoxy- und Propoxyrest. Insbesondere wegen der leichten Zugänglichkeit sind der Methyl-, Methoxy- und Ethoxyrest bevorzugt.

Besonders vorteilhaft sind Si-Si-Bindungen enthaltende Organosiliciumverbindungen, die der allgemeinen Formel II

$[(SiMe_2)_a(MeSiOR^6)_b(SiMe)_c]_n$ entsprechen,

wobei a:c im Bereich von 5:3 bis 3:5, $Me:R^6O$ im Bereich von 8:1 bis 25:1 und n im Bereich von 2 bis 50 liegen, die Summe (a + b + c) gleich 1 ist und $R^6$ Methyl- oder Ethylrest bedeutet.

Bei einer bevorzugten Ausführungsform des erfindungsgemäßen Verfahrens werden den oben genannten Verbindungen der allgemeinen Formel II Organosiliciumverbindungen der allgemeinen Formel III

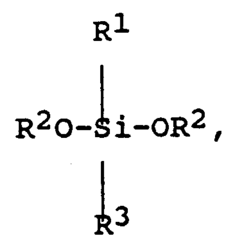

wobei $R^1$, $R^2$ und $R^3$ die oben dafür gegebene Bedeutung haben, zugesetzt.

Die Organosiliciumverbindungen der allgemeinen Formel III sind handelsübliche Produkte bzw. durch einfache Verfahren wie in W. Noll, Chemistry and Technology of Silicones, Academic Press, Orlando, 1968, beschrieben leicht zugänglich, wodurch eine genau Beschreibung von Herstellungsverfahren unnötig erscheint.

Bevorzugt werden 0,1 bis 40 Gew.-% Organosiliciumverbindung der allgemeinen Formel III, insbesondere 1 bis 10 Gew.-%, bezogen auf eingesetzte Verbindung der allgemeinen Formel II verwendet.

Beispiele für Verbindungen der allgemeinen Formel III sind Dimethoxydimethylsilan, Dimethoxymethylvinylsilan, Dimethoxymethylphenylsilan, Dimethoxyethylmethylsilan, Diethoxydimethylsilan, Diethoxymethylethylsilan, Diethoxymethylphenylsilan und Diethoxymethylvinylsilan.

Insbesondere werden Dimethoxymethylvinylsilan und Dimethoxymethylphenylsilan verwendet.

Vorzugsweise wird das erfindungsgemäße Verfahren in inerten organischen Lösungsmitteln wie aromatischen oder aliphatischen Kohlenwasserstoffen durchgeführt. Beispiele für aromatische Kohlenwasserstoffe sind Toluol, Xylol und Cumol und für aliphatische Kohlenwasserstoffe Octan, Dekan und Petrolether verschiedener Siedefraktionen.

Insbesondere finden Toluol, Xylol oder Petrolether verschiedener Siedefraktionen Verwendung.

Die dem erfindungsgemäßen Verfahren zugrundeliegenden chemischen Reaktionen laufen gemäß folgenden Gleichungen A und B ab:

A: ≡ SiOR + ≡ SiOR + = BOH -----> ≡ SiOSi ≡ + = BOR + ROH

B: ≡ SiOR + = BOH -----> ≡ SiOB = + ROH

Hierbei werden die flěchtigen Bestandteile, d. h. die Borsäureester und die Alkohole, destillativ aus dem Reaktionsgemisch entfernt.

Die Reaktion wird vorzugsweise bei Atmosphärendruck, d.h. bei 1020 hPa(abs.) oder ungefähr 1020 hPa(abs.) durchgeführt. Es können jedoch auch höhere und niedrigere Drucke verwendet werden.

Die erfindungsgemäß hergestellten Organopolysilane werden in Verfahren zur Herstellung von SiC-enthaltendem Keramikmaterial verwendet.

So werden sie in Verfahren zur Herstellung von Schutzüberzügen auf Basis von Siliciumcarbid eingesetzt. Diese Beschichtungen auf metallischen und nichtmetallischen Oberflächen sind thermisch und chemisch beständig.

Bei einem bevorzugten Verfahren zur Herstellung von Schutzüberzügen auf Basis von Siliciumcarbid werden erfindungsgemäß hergestellte Organopolysilane auf das zu schützende Substrat aufgebracht und unter inerter Atmosphäre bei Temperaturen im Bereich von 700 bis 1500 °C beziehungsweise unter

reaktiver Atmosphäre bei Temperaturen von 200 bis 700 °C umgesetzt.

Inerte Atmosphäre in diesem Zusammenhang bedeutet Inertgase wie Argon oder Stickstoff oder ein Vakuum. Reaktive Atmosphäre bedeutet Luft- oder sauerstoffhaltige Gasgemische.

Bevorzugte Temperaturen bei inerter Atmosphäre liegen im Bereich von 900 bis 1300 °C, bei reaktiver Atmosphäre im Bereich von 250 bis 600 °C.

Die Auftragung der Beschichtung kann in beliebiger für das Auftragen von flüssigen oder pastösen Stoffen auf Substrate geeigneter Weise, z. B. durch Tauchen, Sprühen, Streichen, Gießen oder Walzen, erfolgen.

Nach dem Auftragen wird die Beschichtung vorzugsweise 15 Minuten bis 2 Stunden bei Temperaturen von vorzugsweise 10 bis 200 °C in inerter oder reaktiver Atmosphäre getrocknet.

Besonders vorteilhafte Ausgangsmaterialien für Schutzüberzüge auf Basis von Siliciumcarbid bestehen aus folgenden Komponenten mit den genannten Zusammensetzungen.:

10 bis 80 Gew.-%, vorzugsweise 20 bis 50 Gew.-%, SiC-Pulver einer mittleren Korngrößenverteilung von 0,1 bis 20 µ m,
vorzugsweise 0,3 bis 5 µ m,
10 bis 80 Gew.-%, vorzugsweise 15 bis 60 Gew.-%, organisches Lösungsmittel und
10 bis 80 Gew.-%, vorzugsweise 15 bis 40 Gew.-%, erfindungsgemäß hergestelltes Organopolysilan.

Angaben in Gew.-% beziehen sich hierbei auf das Gesamtgewicht der Formulierung für den Schutzüberzug. Bevorzugt verwendete Lösungsmittel sind aromatische und aliphatische Kohlenwasserstoffe wie Toluol, Xylol und Petrolether verschiedener Siedefraktionen.

Vorzugsweise weisen die erfindungsgemäß hergestellten Schutzäberzüge eine Dicke von 2 - 2000 µ m, insbesondere 2 - 50 µ m, auf. Sie finden insbesondere Verwendung zur Erzeugung thermisch und chemisch beständiger Oberflächenbeschichtungen auf Metallen, Keramik, Glaskeramik, Faserwerkstoffen und Kohlenstoff. Besonders wichtig ist der Oxidationsschutz von CFC (Carbon Fiber Reinforced Carbon) und Graphit, die Oberflächenversiegelung von porösen Keramik-oder Faserwerkstoffen und der Korrosionsschutz von Metallen, wie Eisen, Stahl und Kupfer.

Die erfindungsgemäß hergestellten Organopolysilane werden weiter in Verfahren zur Herstellung von SiC-Fasern eingesetzt. Siliciumcarbidfasern und Verfahren zu ihrer Herstellung aus metallorganischen Polymeren sind bekannt. Sie werden aus Polysilanen, Polycarbosilanen und Polysilazanen hergestellt. Allen Verfahren gemeinsam ist das Verspinnen eines geeigneten Polymeren mit anschließender Pyrolyse unter Inertgas oder Vakuum.

Bei einem bevorzugten Verfahren zur Herstellung von SiC-Fasern werden erfindungsgemäß hergestellte Organopolysilane zu Fasern versponnen und unter inerter Atmosphäre oder im Vakuum bei Temperaturen im Bereich von 800 bis 1300 °C umgesetzt.

Bevorzugte Temperaturen sind im Bereich von 1000 bis 1150 °C und bevorzugte Inertgase Argon und Stickstoff.

Das Verspinnen zu Fasern wird durch bekannte Verfahren, wie Trockenspinnen, Naßspinnen oder Schmelzspinnen, vorzugsweise jedoch durch Schmelzspinnen, durchgeführt. Hierbei werden aus der Schmelze Fasern mit einem mittleren Durchmesser von vorzugsweise 5 - 300 µ m versponnen und durch Einwirkung von Wärme, Licht, wie beispielsweise UV-Licht, Wasserdampf und/oder Sauerstoff, insbesondere jedoch Luft vernetzt. Die vernetzten Fasern können unter Inertgas oder Luft bei Temperaturen von 50 - 400 °C verstreckt werden.

Den erfindungsgemäß hergestellten Organopolysilanen können bei dem Verfahren zur Herstellung von SiC-Fasern 0,1 bis 30 Gew.% (bezogen auf eingesetztes Organopolysilan), vorzugsweise 1 bis 10 Gew.-%, Verbindung der allgemeinen Formel IV

$$R^7O[(R^7O)_2TiO]_sTi(OR^7)_3,$$

wobei $R^7$ Alkylrest bedeutet und s innerhalb der Grenzen von 1 bis 1000 liegt, zugesetzt werden.

Die Herstellung der Verbindungen der allgemeinen Formel IV ist bekannt und beispielsweise in D.C. Bradley, R.C. Mehrotra und D.P. Gaur, Metal Alkoxides, Academic Press Inc., London, 1978 beschrieben.

Ein bevorzugter Rest $R^7$ der allgemeinen Formel IV ist der Butylrest.

Beim Zusetzen der Verbindungen der allgemeinen Formel IV geht man vorzugsweise derart vor, daß das Organopolysilan in einem organischen Lösungsmittel gelöst wird, die Verbindung der allgemeinen Formel IV zugesetzt wird und das Lösungsmittel wieder entfernt wird.
Bevorzugte Lösungsmittel sind aromatische oder aliphatische Kohlenwasserstoffe, wie Toluol, Xylol und Petrolether verschiedener Siedefraktionen in Mengen von vorzugsweise 1 bis 99 Gew.-% (bezogen auf eingesetztes Organopolysilan), insbesondere 30 bis 60 Gew.-%. Die Entfernung der Lösungsmittel erfolgt

vorzugsweise bei Temperaturen im Bereich von 100 bis 230 °C und Drücken im Bereich von 0,1 bis 10 mbar.

SiC-Fasern finden hauptsächlich Anwendung in Faserverbundwerkstoffen, vorzugsweise Metallen wie Aluminium und Titan oder keramischen Materialien wie Siliciumcarbid.

Die erfindungsgemäß hergestellten Organopolysilane werden weiter in Verfahren zur Herstellung von porösen Siliciumcarbidkeramiken eingesetzt.

Bei einem bevorzugten Verfahren zur Herstellung von poröser SiC-Keramik werden erfindungsgemäß hergestellte Organopolysilane mit SiC-Pulver vermischt, zu Formkörpern verpreßt und unter inerter Atmosphäre oder im Vakuum bei Temperaturen im Bereich von 700 bis 2200 °C umgesetzt.

Bevorzugte Temperaturen sind im Bereich von 900 bis 1500 °C und bevorzugte SiC-Pulver weisen eine mittlere Korngröße von 0,1 bis 100 $\mu$ m, insbesondere 0,4 bis 50 $\mu$ m, auf. Vorzugsweise werden 25 bis 95 Gew.-% (bezogen auf eingesetztes Organopolysilan), insbesondere 50 bis 80 Gew.-%, SiC-Pulver verwendet.

Dem Gemisch, bestehend aus Organopolysilan und SiC-Pulver, werden vorzugsweise noch Preßhilfsstoffe, insbesondere Fließhilfsmittel, in Mengen von 0,01 bis 5 Gew.-% (bezogen auf eingesetztes SiC-Pulver), insbesondere 0,2 bis 1 Gew.-%, zugesetzt. Fließhilfsmittel sind beispielsweise in Aldinger, Kalz; Angew.-Chemie 5, 381, 1987, beschrieben. Insbesondere werden Glycerin, Ammoniumstearat und Polyethylenglycole verwendet.

Beim Vermischen des Organopolysilans mit dem SiC-Pulver und gegebenenfalls mit dem Preßhilfsstoff geht man vorzugsweise derart vor, daß das Organopolysilan in einem organischen Lösungsmittel gelöst wird und mit den weiteren Komponenten vermischt wird. Bevorzugte Lösungsmittel sind aromatische oder aliphatische Kohlenwasserstoffe, wie Toluol, Xylol und Petrolether verschiedener Siedefraktionen, in Mengen von vorzugsweise 10 bis 99 Gew.-% (bezogen auf das Gemisch), insbesondere 35 bis 55 Gew.-%. Anschließend wird das Lösungsmittel entfernt, vorzugsweise bei Temperaturen von 50 bis 200 °C und Drücken von 0,1 bis 10 mbar. Der verbleibende Rückstand wird zerkleinert und gesiebt. Das so erhaltene Pulver mit einer maximalen Korngröße von vorzugsweise 500 $\mu$ m, insbesondere 200 $\mu$ m, wird mit Hilfe einer Presse gegebenenfalls unter Temperatureinwirkung zu einem Formkörper verpreßt. Dies kann unter Inertgas, Luft oder Vakuum erfolgen.

Die erfindungsgemäßen porösen Siliciumkeramiken werden insbesondere in der Filtertechnik eingesetzt. Durch die Korngrößen und die Korngrößenverteilung der eingesetzten SiC-Pulver und auch durch die Verhältnisse SiC-Pulver zu Organopolysilan lassen sich die Porengrößen und Porengrößenverteilung in den Keramiken einstellen. Einer der Vorteile von SiC-Filterplatten ist, daß organische Filterrückstände durch Oxidation leicht entfernt werden können, ohne daß dabei die Keramikfilter zerstört werden.

Beispiel 1

Herstellung einer Organomethoxypolysilanlösung

Ein Gemisch aus 940 g 1.1.2 -Trimethyltrimethoxydisilan und 60g 1.1.2.2 -Tetramethoxydimethyldisilan erwärmte sich nach der Zugabe von 3 g Natriummethylat von 25 °C auf 90 °C. Anschließend wurde das Gemisch auf 170 °C erwärmt, wobei 755 g eines Gemisches aus Methyltrimethoxysilan und Dimethyldimethoxysilan abdestillierten. Der Rückstand von 245g wurde in 420g Petrolether mit einem Siedebereich von 170-200 °C gelöst.

Analog oben angegebener Vorschrift wurden folgende weiteren Umsetzungen durchgeführt, wobei die Angaben unter A die laufende Nummer des Versuches wiedergeben, unter B die Menge an 1.1.2 -Trimethyltrimethoxydisilan in g, unter C die Menge an 1.1.2.2 -Tetramethoxydimethyldisilan in g, unter D die Menge an Natriummethylat in g, unter E die Umsetzungstemperatur in °C, unter F die Menge an Destillat in g, unter G die Menge an Rückstand in g und unter H die Menge an Petrolether in g.

| A | B | C | D | E | F | G | H |
|---|---|---|---|---|---|---|---|
| 1/1 | 1000 | 0 | 1 | 200 | 680 | 320 | 320 |
| 1/2 | 1000 | 0 | 2 | 170 | 740 | 260 | 260 |
| 1/3 | 1000 | 0 | 2 | 150 | 720 | 280 | 280 |
| 1/4 | 960 | 40 | 2,5 | 150 | 730 | 270 | 270 |
| 1/5 | 960 | 40 | 2,5 | 180 | 755 | 245 | 245 |
| 1/7 | 900 | 100 | 2,5 | 150 | 735 | 265 | 265 |
| 1/8 | 900 | 100 | 1 | 180 | 690 | 310 | 310 |
| 1/9 | 600 | 400 | 2,5 | 150 | 760 | 240 | 240 |
| 1/10 | 600 | 400 | 2 | 150 | 740 | 260 | 260 |
| 1/11 | 600 | 400 | 2 | 170 | 755 | 245 | 245 |

Beispiel 2

Herstellung einer Organoethoxypolysilanlösung

Ein Gemisch aus 140 g 1.1.2 -Trimethyltriethoxydisilan und 140g 1.1.2.2 -Tetraethoxydimethyldisilan erwärmt sich nach der Zugabe von 1,5 g Natriummethylat von 25 °C auf 80 °C. Anschließend wurde das Gemisch auf 180 °C erwärmt, wobei 190 g eines Gemisches aus Methyltriethoxysilan und Dimethyldiethoxysilan abdestillierten. Der Rückstand von 90 g wurde in 90g Petrolether mit einem Siedebereich von 170-200 °C gelöst.

Beispiel 3

450 g einer Polysilanlösung gemäß Beispiel 1 wurden mit 6 g Borsäure (reinst, kristallin) versetzt, langsam bis auf Rückflußtemperatur erwärmt und 3 Stunden lang auf dieser Temperatur gehalten. Gleichzeitig wurden langsam 150g Destillat, bestehend aus Borsäuremethylester, Methanol und Petrolether, abdestilliert. Nach der Entfernung des Lösungsmittels bei 160 °C und 0,8 mbar wurde ein Organopolysilan mit einem Erweichungspunkt von 80 °C erhalten.

Analog oben angegebener Vorschrift wurden folgende weiteren Umsetzungen durchgeführt, wobei die Angaben unter A die laufende Nummer des Versuches wiedergeben, unter B die Menge an eingesetztem Organopolysilan in g, unter C die laufende Nummer der Polysilanlösung, unter D die Menge an Borsäure in g, unter E die Menge an Destillat in g, unter F der Erweichungspunkt in °C.

| A | B | C | D | E | F |
|---|---|---|---|---|---|
| 3/1 | 300 | 1/1 | 6 | 100 | 85 |
| 3/2 | 480 | 1/5 | 12 | 150 | 120 |
| 3/3 | 510 | 1/8 | 16 | 170 | 95 |
| 3/4 | 400 | 1/11 | 13 | 130 | >260 |
| 3/5 | 300 | 1/8 | 6 | 100 | 85 |
| 3/6 | 390 | 1/7 | 16 | 130 | 175 |
| 3/7 | 690 | 1/2 | 14 | 230 | 110 |
| 3/8 | 690 | 1/2 | 10 | 230 | 100 |
| 3/9 | 590 | 1/2 | 6 | 200 | 90 |
| 3/10 | 540 | 1/2 | 4 | 180 | 110 |
| 3/11 | 790 | 1/7 | 10 | 260 | 90 |
| 3/12 | 1800 | 1/7 | 18 | 600 | 60 |

Beispiel 4

85g einer Organopolysilanlösung gemäß Beispiel 2 wurden mit 4,6 g Methyldimethoxyvinylsilan und 3 g Borsäure (reinst, Kristallin) versetzt, langsam bis auf Rückflußtemperatur erwärmt und 20 Stunden lang bei dieser Temperatur gehalten. Gleichzeitig wurden langsam 30 g Destillat, bestehend aus Borsäureestern,

den entsprechenden Alkoholen und Petrolether, abgenommen. Nach der Entfernung des Lösungsmittels bei 150 °C und 0,2 mbar wurden 35 g eines Organopolysilans mit einem Erweichungspunkt von > 260 °C erhalten.

Beispiel 5

510 g einer gemäß Beispiel 1 hergestellten Organopolysilanlösung wurden mit 40 g Methyldimethoxyphenylsilan und 15 g Borsäure (reinst, kristallin) versetzt, langsam auf Rückflußtemperatur erwärmt und 5 Stunden lang auf dieser Temperatur gehalten. Gleichzeitig wurden langsam 150 g Destillat, bestehend aus Borsäuremethylester, Methanol und Petrolether, abgenommen. Nach der Entfernung des Lösungsmittels bei 170 °C und 0,2 mbar wurden 175 g eines Organopolysilans mit einem Erweichungspunkt von 70 °C erhalten.

Beispiel 6

530 g einer gemäß Beispiel 1 erhaltenen Organopolysilanlösung wurden mit 30 g Methyldimethoxyvinylsilan, 30 g Methyldimethoxyphenylsilan und 25 g Borsäure (reinst, kristallin) versetzt, langsam bis auf Rückflußtemperatur erhitzt und 2 h lang auf dieser Temperatur gehalten. Gleichzeitig wurden langsam 170 g Destillat, bestehend aus Borsäuremethylester, Methanol und Petrolether, abgenommen. Nach der Entfernung des Lösungsmittels bei 170 °C und 0,8 mbar wurden 155 g eines Organopolysilans mit einem Erweichungspunkt von 60 °C erhalten.

Analog oben angegebener Vorschrift wurden folgende weiteren Umsetzungen durchgeführt, wobei die Angaben unter A die laufende Nummer des Versuches wiedergeben, unter B die Menge an eingesetztem Organopolysilan in g, unter C die laufende Nummer der Polysilanlösung, unter D die Menge an Borsäure in g, unter E die Menge an Methyldimethoxyvinylsilan in g, unter F die Menge an Methyldimethoxyphenylsilan in g, unter G die Menge an Destillat in g, unter H der Erweichungspunkt in °C

| A | B | C | D | E | F | G | H |
|---|---|---|---|---|---|---|---|
| 6/1 | 620 | 1/3 | 15 | 30 | 0 | 170 | 105 |
| 6/2 | 620 | 1/3 | 15 | 50 | 0 | 180 | 120 |
| 6/3 | 630 | 1/3 | 10 | 50 | 0 | 180 | 65 |
| 6/4 | 610 | 1/4 | 15 | 60 | 0 | 170 | 55 |
| 6/5 | 710 | 1/4 | 45 | 75 | 0 | 220 | >260 |
| 6/6 | 1600 | 1/11 | 60 | 120 | 0 | 500 | >260 |
| 6/7 | 520 | 1/10 | 15 | 50 | 0 | 150 | 130 |
| 6/8 | 590 | 1/9 | 15 | 50 | 0 | 200 | 105 |
| 6/9 | 620 | 1 | 20 | 25 | 0 | 190 | >260 |

Beispiel 7

120g eines gemäß Beispiel 3, 5 oder 6 hergestellten Organopolysilans mit einem Erweichungspunkt im Bereich von 60 bis 110 °C wurde in 120 g Petrolether der Siedefraktion 170-200 °C mit 6 g Polytitanbutylat versetzt und anschließend 30 min auf 110° C erhitzt. Anschließend wurde das Lösungsmittel bei 170°C und 0,2 mbar entfernt. Die so erhaltenen Polymere waren löslich in organischen Lösungsmitteln und wiesen einen Erweichungspunkt im Bereich von 80 bis 130 °C auf. In einer Schmelzspinnvorrichtung mit einer 300 µm-Düse wurden diese Polymeren bei 140 bis 170 °C und 6 bis 10 bar Argondruck versponnen, wobei die Abzuggeschwindigkeit im Bereich von 15 bis 100 m/min lag. Bei Austritt aus der Spinndüse waren die Fasern blaugrau und nicht transparent. Die Fasern wurden dann 24 Stunden lang bei Licht und Luft gelagert, wobei sie farblos und transparent wurden. Die so erhaltenen Fasern zeigten gute Reißfestigkeit und Flexibilität. Diese Fasern wurden unter Argon auf 1200 °C aufgeheizt und 20 min bei dieser Temperatur gehalten. Es wurden SiC-Fasern guter Flexibilität und Zugfestigkeit erhalten.

Beispiel 8

100 g eines gemäß Beispiel 3, 4, 5 oder 6 hergestellten Organopolysilans wurden mit 200 g Petrolether der Siedefraktion 170-200 °C, 0,5 g Ammoniumstearat, 0,5 g Glycerin und 160 g Siliciumcarbidpulver

versetzt und intensiv gerührt. Anschließend wurde das Lösungsmittel bei 180 °C und 0,2 mbar abgezogen und der feste Rückstand mit Hilfe einer Mühle zerkleinert. Das so erhaltene Pulver mit einer maximalen Teilchengröße von 200 µm wurde in eine Preßform gefüllt und bei einem Druck von 600 kNewton 20 Sekunden gepreßt. Anschließend wurden diese Formkörper in einem mit Argon gespülten Ofen auf 1300 °C erhitzt und 90 min auf dieser Temperatur gehalten. Die nach dieser Methode hergestellten keramischen Platten wiesen eine Dichte von 1,5-1,9 g/cm$^3$ und eine hohe Festigkeit auf.

Beispiel 9

160 g eines gemäß Beispiel 3, 4, 5 oder 6 hergestellten Organopolysilans wurden mit 250 g Petrolether der Siedefraktion 170-200 °C und 75 g Siliciumcarbidpulver mit einer maximalen Teilchengröße von 20 µm vermischt und intensiv gerührt. Dieses Gemisch eignet sich zum Auftragen durch Spritzen, Pinseln, Tauchen oder Rakeln.
Teststäbchen aus CFC (Carbon Fiber Reinforced Carbon) oder Graphit wurden mit dieser Zusammensetzung bestrichen und in einem Ofen unter Argonspülung auf 1100 °C aufgeheizt und 1,5 Stunden bei dieser Temperatur gehalten. Nach dem Abkühlen hatten sich auf den Stäbchen gleichmäßige, fest haftende Siliciumcarbidbeschichtungen gebildet.

Beispiel 10

Beispiel 9 wurde wiederholt mit der Änderung, daß Teststäbchen aus Eisen, Stahl und Kupfer verwendet wurden und die Pyrolysetemperatur 800 °C betrug. Nach dem Abkühlen wurden gleichmäßige, fest haftende Siliciumcarbidbeschichtungen erhalten.

Beispiel 11

Die Beispiele 9 und 10 wurden wiederholt mit der Änderung, daß unter Luft mit einer Aufheizrate von 1 °C/min auf 300 °C aufgeheizt wurde. Nach dem Abkühlen hatten sich auf den Teststäbchen gleichmäßige, rißfreie, gut haftende, hydrophobe, elastische Beschichtungen gebildet.

**Patentansprüche**

**1.** Verfahren zur Herstellung von Organopolysilanen, dadurch gekennzeichnet, daß Si-Si-Bindungen enthaltende Organosiliciumverbindungen der allgemeinen Formel I

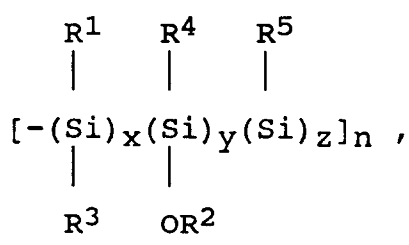

wobei
$R^1$, $R^3$, $R^4$ und $R^5$ jeweils unabhängig voneinander Wasserstoff-, Alkyl-, Alkenyl-, Aryl- oder Alkoxyrest bedeuten,
$R^2$ für Wasserstoff- oder Alkylrest steht,
x im Bereich von 0,1 bis 0,9,
y im Bereich von 0,01 bis 0,5,
z im Bereich von 0 bis 0,5 und
n im Bereich von 2 bis 1000 liegen,
mit der Maßgabe, daß die Summe aus (x + y + z) gleich 1 ist, in Gegenwart von 0,1-10 Gew.-% Borsäure, bezogen auf eingesetzte Si-Si-Bindungen enthaltende Organosiliciumverbindungen, umgesetzt werden.

**2.** Verfahren nach Anspruch 1, dadurch gekennzeichnet, daß die Umsetzung bei Temperaturen im Bereich von 20 bis 250 °C erfolgt.

**3.** Verfahren nach Anspruch 1 oder 2, dadurch gekennzeichnet, daß als Si-Si-Bindungen enthaltende Organosiliciumverbindungen Verbindungen der allgemeinen Formel II

$[(SiMe_2)_a(MeSiOR^6)_b(SiMe)_c]_n$,

wobei a:c im Bereich von 5:3 bis 3:5, Me:$R^6$O im Bereich von 8:1 bis 25:1 und n im Bereich von 2 bis 50 liegen, die Summe (a + b + c) gleich 1 ist und $R^6$ Methyl- oder Ethylrest bedeutet, verwendet werden.

**4.** Verfahren nach einem oder mehreren der Ansprüche 1 bis 3, dadurch gekennzeichnet, daß Organosiliciumverbindungen der allgemeinen Formel III

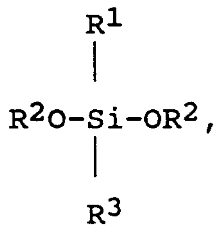

wobei $R^1$, $R^2$ und $R^3$ die oben dafür gegebene Bedeutung haben, zugesetzt werden.

**5.** Verfahren nach einem oder mehreren der Ansprüche 1 bis 4, dadurch gekennzeichnet, daß 0,1 bis 40 Gew.-% Organosiliciumverbindung der allgemeinen Formel III, bezogen auf eingesetzte Si-Si-Bindungen enthaltende Organosiliciumverbindung, verwendet werden.

**6.** Verfahren zur Herstellung von Schutzüberzügen auf Basis von Siliciumcarbid, dadurch gekennzeichnet, daß ein nach einem oder mehreren der Ansprüche 1 bis 5 hergestelltes Organopolysilan auf das zu schützende Substrat aufgebracht und unter inerter Atmosphäre bei Temperaturen im Bereich von 700 bis 1500 °C oder unter reaktiver Atmosphäre bei Temperaturen von 200 bis 700 °C umgesetzt wird.

**7.** Verfahren zur Herstellung von SiC-Fasern, dadurch gekennzeichnet, daß ein nach einem oder mehreren der Ansprüche 1 bis 5 hergestelltes Organopolysilan zu Fasern versponnen und unter inerter Atmosphäre oder im Vakuum bei Temperaturen im Bereich von 800 bis 1300 °C umgesetzt wird.

**8.** Verfahren zur Herstellung von poröser SiC-Keramik, dadurch gekennzeichnet, daß ein nach einem oder mehreren der Ansprüche 1 bis 5 hergestelltes Organopolysilan mit SiC-Pulver vermischt, zu Formkörpern verpreßt und unter inerter Atmosphäre oder im Vakuum bei Temperaturen im Bereich von 700 bis 2200 °C umgesetzt wird.

## Claims

**1.** Process for the preparation of an organopolysilane, characterized in that organosilicon compounds containing Si-Si bonds of the general formula I

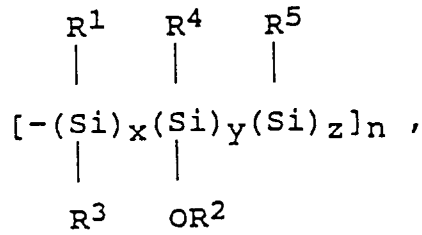

where
$R^1$, $R^3$, $R^4$ and $R^5$, in each case independently of one another, denote hydrogen or an alkyl, alkenyl, aryl or alkoxy radical,
$R^2$ represents hydrogen or an alkyl radical,
x is in the range 0.1 to 0.9,
y is in the range 0.01 to 0.5,
z is in the range 0 to 0.5 and
n is in the range 2 to 1,000,
with the proviso that the sum of (x + y + z) is 1 are reacted in the presence of 0.1-10% by weight of boric acid, based on the organosilicon compound employed containing Si-Si bonds.

**2.** Process according to Claim 1, characterized in that the reaction is carried out at a temperature in the range 20 to 250 °C.

**3.** Process according to Claim 1 or 2, characterized in that the organosilicon compound containing Si-Si bonds is a compound of the general formula II

$[(SiMe_2)_a(MeSiOR^6)_b(SiMe)_c]_n$,

where a:c is in the range 5:3 to 3:5, Me:$R^6$O is in the range 8:1 to 25:1, and n is in the range 2 to 50, the sum (a + b + c) is 1, and $R^6$ denotes a methyl or ethyl radical.

**4.** Process according to one or more of Claims 1 to 3, characterized in that an organosilicon compound of the general formula III

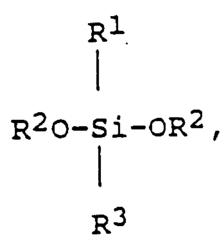

where $R^1$, $R^2$ and $R^3$ have the abovementioned meaning for $R^1$, $R^2$ and $R^3$ respectively, is added.

**5.** Process according to one or more of Claims 1 to 4, characterized in that 0.1 to 40% by weight of an organosilicon compound of the general formula III, based on the organosilicon compound employed containing Si-Si bonds, are used.

**6.** Process for the preparation of protective coatings based on silicon carbide, characterized in that an organopolysilane prepared according to one or more of Claims 1 to 5 is applied to the substrate to be protected, and the coating is reacted under an inert atmosphere at a temperature in the range 700 to 1500 °C or under a reactive atmosphere at a temperature of from 200 to 700 °C.

**7.** Process for the production of SiC fibres, characterized in that an organopolysilane prepared according to one or ore of Claims 1 to 5, to fibres is spun, and the fibres are reacted under an inert atmosphere or in vacuo at a temperature in the range 800 to 1300 °C.

8. Process for the preparation of a porous SiC ceramic, characterized in that an organopolysilane prepared according to one or more of Claims 1 to 5, is mixed with SiC powder, the mixture is compression-moulded to form a moulding, and the moulding is reacted under an inert atmosphere or in vacuo at a temperature in the range 700 to 2200 °C.

**Revendications**

1. Procédé pour la préparation d'organopolysilanes, caractérisé en ce que l'on transforme des composés organosiliciques comportant des liaisons Si-Si de formule générale I

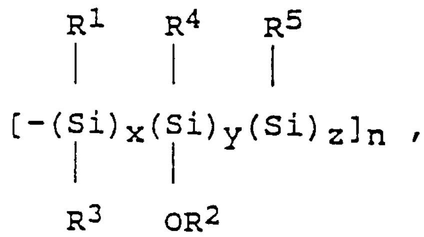

où
$R^1$, $R^3$, $R^4$ et $R^5$ représentent chaque fois, de façon indépendante les uns des autres, un reste hydrogène, alkyle, alcényle, aryle où alcoxy,
$R^2$ représente un reste hydrogène ou alkyle,
x est dans le domaine de 0,1 à 0,9,
y est dans le domaine de 0,01 à 0,5,
z est dans le domaine de 0 à 0,5 et
n est dans le domaine de 2 à 1000,
à la condition que la somme (x + y + z) soit égale à 1,
en présence de 0,1 à 10 % en poids d'acide borique, calculé sur les composés organosiliciques utilisés comportant les liaisons Si-Si.

2. Procédé selon la revendication 1, caractérisé en ce que la transformation s'effectue à des températures dans le domaine de 20 à 250 °C.

3. Procédé selon la revendication 1 ou caractérisé en ce que, comme composes organosiliciques contenant des liaisons Si-Si, on utilise des composés de formule générale II

$[(SiMe_2)_a(MeSiOR^6)_b(SiMe)_c]_n$,

où a : c est dans le domaine de 5 : 3 à 3 : 5, Me : $R^6O$ est dans le domaine de 8 : 1 à 25 : 1 et n est dans le domaine de 2 à 50, la somme (a + b + c) est égale à 1 et $R^6$ représente le reste méthyle ou éthyle.

4. Procédé selon une ou plusieurs des revendications 1 à 3, caractérisé en ce que l'on ajoute des composés organosiliciques de formule générale III

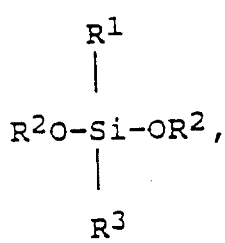

où $R^1$, $R^2$ et $R^3$ ont la signification donnée plus haut.

**5.** Procédé selon une ou plusieurs des revendications 1 à 4, caractérisé en ce que l'on utilise de 0,1 à 40 % en poids d'un composé organo-silicium de formule générale III, calculé sur le composé organo-silicium utilisé comportant des liaisons Si-Si.

**6.** Procédé pour préparer des revêtements protecteurs à base de carbure de silicium, caractérisé en ce que l'on applique sur le substrat à protéger un organopolysilane préparé conformément à une ou plusieurs des revendications 1 à 5 et en ce qu'on le transforme sous une atmosphère inerte à des températures dans le domaine de 700 à 1500 °C ou sous une atmosphère réactive à des températures de 200 à 700 °C.

**7.** Procédé pour préparer des fibres en SiC, caractérisé en ce que l'on file sous forme de fibres un organopolysilane produit selon une ou plusieurs des revendications 1 à 5 et en ce qu'on le transforme sous atmosphère inerte ou sous vide à des températures dans le domaine de 800 à 1300 °C.

**8.** Procédé pour préparer une céramique poreuse en SiC, caractérisé en ce que l'on mélange un organopolysilane, produit selon une ou plusieurs des revendications 1 à 5, avec une poudre de SiC, on le comprime pour obtenir des corps moulés et on le transforme sous atmosphère inerte ou sous vide à des températures dans le domaine de 700 à 2200 °C.